# EUROPÄISCHE PATENTSCHRIFT

(11) **EP 0 599 407 B1**
(45) Veröffentlichungstag und Bekanntmachung des Hinweises auf die Patenterteilung: **03.09.1997**
(21) Anmeldenummer: 93203230.3
(22) Anmeldetag: 18.11.1993
(51) Int. Cl.: C09K 11/02, C09K 11/84, H01J 29/20

(54) **Verfahren zur Bedeckung von rot lumineszierenden Leuchtstoffpartikeln mit Hämatit**
Coating process of red luminescent phosphor particles with hematite
Procédé de recouvrement de particules luminescentes de luminescence rouge par de l'hématite

(30) Priorität: 26.11.1992 DE 4239747
(43) Veröffentlichungstag der Anmeldung: 01.06.1994
(73) Patentinhaber: Philips Patentverwaltung GmbH, 22335 Hamburg (DE); Philips Electronics N.V., 5621 BA Eindhoven (NL)
(72) Erfinder: Ronda, Cornelis, Dr., D-20097 Hamburg (DE); Hütten, Guido, D-20097 Hamburg (DE); Bredol, Michael, Dr., D-20097 Hamburg (DE); Kynast, Ulrich, Dr., D-20097 Hamburg (DE); Rink, Thomas, D-20097 Hamburg (DE)
(74) Vertreter: Rooda, Hans

(56) Entgegenhaltungen:
- EP-A- 0 013 410
- DE-A- 2 850 081
- PATENT ABSTRACTS OF JAPAN vol. 4, no. 89 (C-16)25. Juni 1980 & JP-A-55 054 382 (KASEI OPTONIX) 21. April 1980

## Beschreibung

Verfahren zur Bedeckung von rot lumineszierenden Leuchtstoffpartikeln mit Hämatit

Die Erfindung bezieht sich auf ein Verfahren zur Bedeckung von rot lumineszierenden Leuchtstoffpartikeln mit Hämatit (α-Fe₂O₃), bei welchem zunächst Fe(OH)₃ auf die Leuchtstoffpartikel aufgebracht wird, welches danach bei erhöhter Temperatur in α-Fe₂O₃ umgewandelt wird. Ein derartiges Verfahren ist durch JP 55-54 382 (A) (engl. Kurzfassung) bekannt.

In dem in JP 55-54382 (A) beschriebenen Verfahren wird zunächst Fe(OH)₂ präzipitiert. Danach wird das Fe(OH)₂ oxidiert zu α-Fe(OH)₃ und eine Mischung von α-Fe(OH)₃ und rot lumineszierende Leuchtstoffpartikeln calciniert. EP 0013410 A1 beschreibt ein Verfahren wobei die Leuchtstoffpartikeln mit Pyrit bedeckt werden das in Hämatit überführt wird. Bei dem in DE-OS 2850081 beschriebenem Verfahren wird Hämatit durch thermische Zersetzung von organischen Eisenverbindungen geformt.

Der Erfindung liegt die Aufgabe zugrunde, ein Verfahren der eingags genannten Art anzugeben, welches eine gute Haftung der Hämatit-Pigmente auf den Leuchtstoffpartikeln und eine gute Kontrastwirkung auf einem Bildschirm ermöglicht. Bei der Durchführung des Verfahrens soll die Entstehung giftiger oder carcinogener Stoffe weitgehend vermieden werden.

Die Lösung gelingt dadurch,
daß zunächst eine wässerige Lösung eines Eisen(III)salzes und eines Komplexbildners hergestellt wird, wobei der Komplexbildner und dessen Konzentration derart gewählt werden, daß mit Fe³⁺-Ionen Komplexe gebildet werden, welche bei einem pH-Wert noch nicht ausfällen ; der pH-Wert ist um mindestens 0,5 größer als der Wert bei welchem die Leuchtstoffpartikel gerade nicht mehr chemisch angegriffen werden und um mindestens 0,5 kleiner als der Wert bei welchem Fe(OH)₃ auszufällen beginnt, wobei die mit Fe³⁺-Ionen gebildenen Komplexe bei weiterer Erhöhung des pH-Wertes trennbar sind, so daß Fe(OH)₃ gebildet wird,
daß danach sofern der pH-Wert noch nicht genügend hohe Werte aufweist, ein basisch wirkender Stoff in der Menge zugegeben wird, daß der pH-Wert auf einen Wert erhört wird, der um mindestens 0,5 kleiner als der Wert ist, bei welchem Fe(OH)₃ auszufällen beginnt,
daß danach die Leuchtstoffpartikel eingerührt werden, daß zu einem beliebigen Zeitpunkt erforderlichenfalls ein sich bei Temperaturerhöhung zersetzender und bei Zersetzung basisch wirkender Stoff zugegeben wird,
und daß danach die Temperatur der Suspension langsam erhöht wird, wodurch die Leuchtstoffpartikel durch homogene Präzipitation mit Fe(OH)₃ bedeckt werden.

Erfindungsgemäß werden die Hämatit-Pigmente durch homogene Präzipitation auf die Leuchtstoffpartikel aufgebracht. Dabei entstehen besonders kleine Pigmentkörner, welche hervorragend haften.

Stöchiometrische Lösungen von Eisen (III)-Salzen in Wasser sind im allgemeinen thermodynamisch instabil gegen Ausfällung von festem Fe(OH)₃. Die durch Hydroxo-Komplex-Bildung des Fe³⁺-Ions resultierende Säurewirkung allein reicht noch nicht aus, um die Lösungen zu stabilisieren; falls die Lösung frei von festem Fe(OH)₃ sein soll, muß daher zusätzlich die dem Anion konjugierte Säure zugegeben werden. Mit oder ohne Säurezugabe sind die Fe(III)-Salzlösungen so stark sauer, daß sulfidische Leuchtstoffe wie insbesondere Y₂O₂S:Eu angegriffen werden.

Die Leuchtstoffpartikel werden zumindest teilweise aufgelöst. Ihre Oberflächen werden beeinträchtigt, so daß insbesondere der Lumineszenzwirkungsgrad verschlechtert wird.

Bei Zugabe basischer Stoffe würde man zwar den pH-Wert soweit erhöhen können, daß die Leuchtstoffe nicht mehr angegriffen werden. Dann würde aber Fe(OH)₃ vorzeitig und unkontrolliert ausfallen. Das wird erfindungsgemäß dadurch vermieden, daß in die saure Fe(III)-Salzlösung ein Stoff gegeben wird, welcher in Konkurrenz zu OH⁻-Ionen andere und ähnlich affine Komplexbildner liefert, welche mit Fe³⁺-Ionen Komplexe bilden, die auch bei höheren und für die Leuchtstoffpartikel unschädlichen pH-Werten noch kein festes Fe(OH)₃ entstehen lassen. Geeignete Komplexbildner sind z.B. Fluorid, Acetylacetonat und insbesondere Oxalat. Dadurch kann der pH-Wert der Lösung, sofern er noch nicht den für die Anlösung der Leuchtstoffpartikel kritischen Wert überschritten hat, durch Zugabe einer Base (beispielsweise NH₄OH, NaOH, KOH) auf einen ausreichenden Wert erhöht werden, welcher jedoch so niedrig sein muß, daß Fe(OH)₃ noch nicht ausgefällt wird. Erst danach, wenn der Gleichgewichtszustand erreicht ist, dürfen die Leuchtstoffpartikel eingerührt werden. Bei weiterer Erhöhung des pH-Werts wird Fe(OH)₃ gebildet und durch homogene Präzipitation auf die Leuchtstoffpartikel abgeschieden.

Die erforderliche langsame und homogene Erhöhung des pH-Werts wird durch allmähliche Temperaturerhöhung bewirkt. Falls dabei nicht ohnehin basisch wirkende Stoffe entstehen oder sich die Stabilität der Fe(III)-Komplexe erniedrigt, kann vorher ein Stoff zugegeben werden, welcher sich thermisch zersetzt und dann zunehmend basischer wirkt.

Je nach Art des gewählten Komplexbildners muß dessen Menge derart angepaßt werden, daß die erfindungsgemäß gesetzten Grenzbedingungen eingehalten werden. Die erforderliche Menge kann auch rechnerisch bei Kenntnis der Stabilitätskonstanten der an der Lösung beteiligten Stoffe in bekannter Weise ermittelt werden.

Da Fe(OH)₃ auch auf als Keime wirkende Verunreinigungspartikel abgeschieden würde, ist es vorteilhaft, daß die das Eisen(III)salz, den Komplexbildner, den basisch wirkenden Stoff und gegebenenfalls den sich bei Temperaturerhöhung zersetzenden Stoff enthaltende Lösung durch ein sehr engporiges Filter gefiltert wird.

Im folgenden werden zwei Ausführungsvarianten der Erfindung näher erläutert.

Fe(NO₃)₃ · 9 H₂O, Oxalsäuredihydrat und Harnstoff wurden in Wasser gelöst. Das molare Verhältnis von Oxalsäuredihydrat/Fe wurde im Bereich von 1 bis 8 variiert, Harnstoff wurde stets im Überschuß zugegeben, vorteilhaft im molaren Verhältnis Harnstoff/Fe von etwa 200. Die Harnstoffmenge ist unkritisch, da nur der nachfolgend bei der thermischen Zersetzung tatsächlich hydrolisierte Anteil an der Reaktion teilnimmt.

In der Lösung können Fe³⁺-Ionen und OH⁻-Ionen zu den Komplexen Fe(OH)²⁺, Fe(OH)₂ ⁺ und Fe(OH)₃ (aq) reagieren. Fe³⁺-Ionen und Oxalat-Ionen ox²⁻ reagieren zu den Komplexen Feox⁺, Fe(ox)⁻₂ und Fe(ox)₃ ³⁻. Je höher das molare Verhältnis Oxalsäuredihydrat/Fe gewählt wird, desto geringer wird das Verhältnis von Hydroxo-Komplexen zu Oxalato-Komplexen. Durch eine entsprechend große Oxalsäuremenge kann also erreicht werden, daß nahezu sämtliche Fe³⁺-Ionen als Oxalato-Komplexe maskiert werden.

Je empfindlicher ein zu bedeckender Leuchtstoff gegen Säureangriff ist, um so höher muß das molare Verhältnis Oxalsäuredihydrat/Fe gewählt werden. Bei Werten zwischen 1 und 2 konnte der pH-Wert nachfolgend auf Werte zwischen 2,8 und 3,7 erhöht werden, ohne daß bereits Fe(OH)₃ ausgefällt wurde. Für besonders empfindliche Leuchtstoffe sind aber molare Verhältnisse von >3 erforderlich. Für Y₂O₂S: Eu hat sich ein Wert von etwa 2 bis 8 als vorteilhaft erwiesen. Im Ausführungsbeispiel wurde ein molares Verhältnis von 4 gewählt. Nachfolgend wurde der pH-Wert der Lösung durch Zugabe von NH₄OH von 2 auf etwa 4,5 erhöht. Danach wurde Y₂O₂S:Eu zugegeben. Unter den angegebenen Bedingungen verläuft die Ausfällung von Fe(OH)₃ nahezu quantitativ, so daß das einzustellende Verhältnis zwischen Fe(III)-Menge und Y₂O₂S-Eu-Menge direkt aus der gewünschten Fe₂O₃-Schichtdicke und der Kornmorphologie des Leuchtstoffs berechnet werden kann. Durch Erhitzen und Rühren bei etwa 70-90°C wurde der Harnstoff zersetzt. Dabei entstand Ammoniumcarbonat (NH₄)₂CO₃, welches schwach basisch reagiert. Ab einem pH-Wert von etwa 5 fiel Fe(OH)₃ aus. Bei pH 7,5 wurde die Reaktion gestoppt. Die beschichteten Leuchtstoffpartikel wurden durch Filtration isoliert und zur Umwandlung von Fe(OH)₃ in α-Fe₂O₃ auf etwa 350° erhitzt.

Mit solchermaßen pigmentieren Leuchtstoffpartikeln wurden Farbbildröhren hergestellt, welche einen besonders hohen Kontrast aufwiesen. Bei den erforderlichen Bearbeitungsschritten wurden die Pigmentschichten nicht beschädigt.

Maskierung des Fe³⁺ gelingt in gleicher Weise, wenn mit folgender Verfahrensvariante gearbeitet wird (Ausnutzung von Fluorid und thermisch instabilen Komplexen): 1,7 g Fe(NO₃)₃ · 9 H₂O, 2g NH₄Cl und 1,55g NH₄F wurden in 100ml H₂O gelöst und über ein 200 nm-Filter filtriert. Der pH-Wert dieser Lösung betrug 5,5, war also genügend hoch, so daß Y₂O₂S:Eu nicht angelöst werden konnte. Dieser Lösung wurden 11,2g Y₂O₂S:Eu zugegeben. Bei langsamer Temperaturerhöhung wurden entstehende (FeF₆)³⁻-Ionen zersetzt, so daß Fe(OH)₃ ausfiel. Die mit Fe(OH)₃ bedeckten Leuchtstoffpartikel wurden wiederum durch Filtration isoliert. Ist phasenreines α-Fe₂O₃ (Hämatit) erwünscht, ist jedoch dem Verfahren mit Oxalsäure der Vorzug zu geben.

## Patentansprüche

1. Verfahren zur Bedeckung von rot lumineszierenden Leuchtstoffpartikeln mit Hämatit (alpha-Fe₂O₃), bei welchem zunächst Fe(OH)₃ auf die Leuchtstoffpartikel aufgebracht wird, welches danach bei erhöhter Temperatur in alpha-Fe₂O₃ umgewandelt wird, dadurch gekennzeichnet,
daß zunächst eine wässerige Lösung eines Eisen(III)salzes und eines Komplexbildners hergestellt wird, wobei der Komplexbildner und dessen Konzentration derart gewählt werden, daß mit Fe³⁺-Ionen Komplexe gebildet werden, welche bei einem pH-Wert noch nicht ausfällen ; der pH-Wert ist um mindestens 0,5 größer als der Wert bei welchem die Leuchtstoffpartikel gerade nicht mehr chemisch angegriffen werden und um mindestens 0,5 kleiner als der Wert bei welchem Fe(OH)₃ auszufällen beginnt, wobei die mit Fe³⁺-Ionen gebildenen Komplexe bei weiterer Erhöhung des pH-Wertes trennbar sind, so daß Fe(OH)₃ gebildet wird,
daß danach sofern der pH-Wert noch nicht genügend hohe Werte aufweist, ein basisch wirkender Stoff in der Menge zugegeben wird, daß der pH-Wert auf einen Wert erhört wird, der um mindestens 0,5 kleiner als der Wert ist, bei welchem Fe(OH)₃ auszufällen beginnt,
daß danach die Leuchtstoffpartikel eingerührt werden, daß zu einem beliebigen Zeitpunkt erforderlichenfalls ein sich bei Temperaturerhöhung zersetzender und bei Zersetzung basisch wirkender Stoff zugegeben wird,
und daß danach die Temperatur der Suspension langsam erhöht wird, wodurch die Leuchtstoffpartikel durch homogene Präzipitation mit Fe(OH)₃ bedeckt werden.

2. Verfahren nach Anspruch 1,
dadurch gekennzeichnet, daß Y₂O₂S:Eu Leuchtstoffpartikel verwendet werden.

3. Verfahren nach Anspruch 1 oder 2,
dadurch gekennzeichnet, daß als bei thermischer Zersetzung basisch wirkender Stoff Harnstoff verwendet wird.

4. Verfahren nach einem der Ansprüche 1 bis 3,
dadurch gekennzeichnet, daß als Komplexbildner Oxalsäure verwendet wird.

5. Verfahren nach einem der Ansprüche 1 bis 3,
dadurch gekennzeichnet, daß als Komplexbildner Fluorid-Ionen verwendet werden.

6. Verfahren nach einem der Ansprüche 1 bis 5,
dadurch gekennzeichnet, daß die das Eisen(III)salz, den Komplexbildner, den basisch wirkenden Stoff und gegebenenfalls den sich bei Temperaturerhöhung zersetzenden Stoff enthaltende Lösung gefiltert wird.

7. Verfahren nach Anspruch 1,
dadurch gekennzeichnet, daß zur Bedeckung von Y₂O₂S:Eu ein Fe(III)-Salz, insbesondere Fe(NO₃)₃ · 9H₂O, Oxalsäuredihydrat und Harnstoff in Wasser gelöst werden, wobei das molare Verhältnis von Oxalsäuredihydrat/Fe größer als 1, vorzugsweise etwa 4 ist, und wobei Harnstoff im Überschuß, vorzugsweise im molaren Verhältnis Harnstoff/Fe etwa 200 zugegeben ist, daß nach der Gleichgewichts-Einstellung NH₄OH bis zur Erhöhung des pH-Wertes auf etwa 4,5 zugegeben wird, daß der erhaltenen Lösung Y₂O₂S:Eu zugegeben wird, und daß die erhaltene Suspension unter Rühren bis auf 70 bis 90°C erwärmt wird, bis der pH-Wert etwa 7,5 erreicht hat.

8. Verfahren nach Anspruch 1,
dadurch gekennzeichnet, daß in Wasser 1,7 bis 17 g/l Fe(NO₃)₃ · 9H₂O, 0 bis 20 g/l NH₄Cl, 1,55 bis 15,5 g/l NH₄F gelöst werden, daß dieser Lösung nach Filtration ca. 112 g/l Y₂O₂S:Eu unter Rühren zugegeben wird, und daß danach die erhaltene Suspension langsam erwärmt wird.

## Claims

1. A method of coating red-luminescing phosphor particles with hematite (α-Fe₂O₃), in which method first Fe(OH)₃ is deposited on the phosphor particles and is subsequently converted into α-Fe₂O₃ at a raised temperature, characterized in that first an aqueous solution of an iron(III) salt and a complexing agent is prepared, in which the complexing agent and its concentration are so chosen that in combination with Fe³⁺ ions complexes are formed which do not yet precipitate at a pH-value which is at least 0.5 higher than the value at which the phosphor particles are just no longer chemically attacked and which is at least 0.5 lower than the value at which Fe(OH)₃ starts to precipitate, and said complexes formed by means of Fe³⁺ ions being dissociable at a further increase in the pH-value so that Fe(OH)₃ is formed, in that subsequently, if the pH-value is not yet high enough, a basic substance is added to the mixture in such a quantity that the pH-value is increased to a value which is at least 0.5 below the value at which Fe(OH)₃ starts to precipitate, in that subsequently the phosphor particles are added while stirring, in that at any moment, as required, a substance is added which dissociates upon an increase in temperature and which behaves as a base upon dissociation, and in that then the temperature of the suspension is slowly increased, whereby the phosphor particles are coated with Fe(OH)₃ through homogeneous precipitation.

2. A method as claimed in Claim 1, characterized in that Y₂O₂S:Eu phosphor particles are used.

3. A method as claimed in Claim 1 or 2, characterized in that urea is used as the substance which acts a base upon thermal dissociation.

4. A method as claimed in any one of the Claims 1 to 3, characterized in that oxalic acid is used as the complexing agent.

5. A method as claimed in any one of the Claims 1 to 3, characterized in that fluoride ions are used as the complexing agents.

6. A method as claimed in any one of the Claims 1 to 5, characterized in that the solution containing the iron(III) salt, the complexing agent, the basic substance and, if present, the substance which dissociates upon an increase in temperature is filtered.

7. A method as claimed in Claim 1, characterized in that a Fe(III) salt, in particular Fe(NO₃)₃ . 9H₂O, oxalic acid dihydrate and urea are dissolved in water for coating of Y₂O₂S:Eu, the molar ratio of oxalic acid dihydrate to Fe being greater than 1, preferably approximately 4, while urea is added in excess quantity, preferably in a molar ratio of urea to Fe of approximately 200, in that after the equilibrium state has been reached NH₄OH is added so as to increase the pH-value to approximately 4.5, in that Y₂O₂S:Eu is added to the resulting solution, and in that the resulting suspension is heated to 70-90° C while stirring until the pH-value has reached approximately 7.5.

8. A method as claimed in Claim 1, characterized in that the following are dissolved in water: 1.7 to 17 g/l Fe(NO₃)₃ . 9H₂O, 0 to 20 g/l NH₄Cl, 1.55 to 15.5 g/l NH₄F, in that, after filtration, approximately 112 g/l Y₂O₂S:Eu is added to this solution while stirring, and in that then the resulting suspension is slowly heated.

## Revendications

1. Procédé de recouvrement de substances luminescentes rouges avec de l'hématite (alpha-Fe₂O₃) dans lequel du Fe(OH)₃ est d'abord appliqué sur les particules luminescentes et ensuite transformé à température élevée en alpha-Fe₂O₃, caractérisé en ce
qu'une solution aqueuse d'un sel de fer (III) et un agent complexant est d'abord constituée, l'agent complexant et sa concentration étant choisis de telle sorte que des complexes sont formés avec des ions Fe³⁺ qui ne précipitent pas encore à une valeur de pH; le pH est supérieur d'au moins 0,5 à la valeur à laquelle les particules luminescentes ne sont précisément plus attaquées chimiquement et inférieur d'au moins 0,5 à la valeur à laquelle le Fe(OH)₃ commence à précipiter, les complexes formés avec les ions Fe³⁺ pouvant être séparés en cas d'augmentation ultérieure du pH de telle sorte que du Fe(OH)₃ soit formé,
qu'ensuite, dans la mesure où le pH ne présente pas encore de valeurs suffisamment élevées, une substance basique est ajoutée en une quantité telle que le pH soit porté à une valeur qui est inférieure d'au moins 0,5 à la valeur à laquelle Fe(OH)₃ commence à précipiter,
qu'ensuite, les particules luminescentes sont agitées, qu'à un quelconque moment, une substance se décomposant en cas d'augmentation de température et basique lors de sa décomposition est éventuellement ajoutée et
qu'enfin, la température de la suspension est lentement relevée, les particules luminescentes étant recouvertes par une précipitation homogène avec du Fe(OH)₃.

2. Procédé selon la revendication 1, caractérisé en ce que des particules luminescentes Y₂O₂S:Eu sont mises en oeuvre.

3. Procédé selon la revendication 1 ou 2, caractérisé en ce que l'urée est mise en oeuvre comme substance basique en cas de décomposition thermique.

4. Procédé selon l'une des revendications 1 à 3, caractérisé en ce que l'acide oxalique est mis en oeuvre comme agent complexant.

5. Procédé selon l'une des revendications 1 à 3, caractérisé en ce que des ions fluorure sont mis en oeuvre comme agent complexant.

6. Procédé selon l'une des revendications 1 à 5, caractérisé en ce que la solution contenant le sel de fer (III), l'agent complexant, la substance basique et, éventuellement, la substance qui se décompose en cas d'augmentation de température est filtrée.

7. Procédé selon la revendication 1, caractérisé en ce que, pour le recouvrement de Y₂O₂S:Eu, un sel de fer(III), en particulier Fe(NO₃)₃.9H₂O, du dihydrate d'acide oxalique et de l'urée sont dissous dans l'eau, le rapport molaire dihydrate d'acide oxalique/Fe étant supérieur à 1 et égal de préférence à environ 4 et l'urée étant additionnée en quantité excédentaire, de préférence dans un rapport molaire urée/Fe d'environ 200, qu'après l'établissement de l'équilibre, du NH₄OH est ajouté jusqu'à l'augmentation du pH à environ 4,5, que du Y₂O₂S:Eu est ajouté à la solution obtenue et que la suspension obtenue est chauffée en agitant jusqu'à une température de 70 à 90°C jusqu'à ce que le pH soit porté à environ 7,5.

8. Procédé selon la revendication 1, caractérisé en ce que 1,7 à 17 g/l de Fe(NO₃)₃.9H₂O, 0 à 20 g/l de NH₄Cl, 1,55 à 15,5 g/l de NH₄F sont dissous dans l'eau, qu'environ 112 g/l de Y₂O₂S:Eu sont ajoutés en agitant à cette solution après filtration et que la suspension obtenue est ensuite chauffée lentement.
